# EUROPEAN PATENT APPLICATION

(11) **EP 3 182 716 A1**
(43) Date of publication of application: **21.06.2017**
(21) Application number: 16200579.7
(22) Date of filing: 24.11.2016
(51) Int. Cl.: H04N 21/4402, H04N 5/232, H04N 21/485

(54) **METHOD AND DEVICE FOR VIDEO DISPLAY**

(30) Priority: 16.12.2015 CN 201510946349
(71) Applicant: Xiaomi Inc., Beijing 100085 (CN)
(72) Inventor: ZHANG, Tao, Haidian District, Beijing 100085 (CN); WANG, Pingze, Haidian District, Beijing 100085 (CN); ZHANG, Shengkai, Haidian District, Beijing 100085 (CN)
(74) Representative: Reeve, Nicholas Edward

(57) **Abstract**

The present disclosure relates to a method and device for video display. The method includes: determining (S101, S401, S501), when a first trigger action is detected on a first video window, a trigger position corresponding to the first trigger action; determining (S102, S402, S502) an observation window centered at the trigger position; enlarging (S103, S403, S503) a second video window in the observation window; and displaying (S104, S407, S504) the enlarged second video window on the first video window. Users may observe details of an interested partial area in the first video window in real time after enlarging the partial area through the solution of the present disclosure, which achieving the automatic enlargement of a partial area of video content and obtaining the zoom function similar to lens, thereby users may concentrate on observing the video of the partial area they are more interested in.

## Description

### FIELD OF THE INVENTION

The present disclosure relates to the technical field of video processing, and more particularly, to a method and device for video display.

### BACKGROUND

With the improvement of cellphone camera, users record more and more videos using their smart phones. However, when a user plays a video directly in the smart phone, some details of scenes in the video are usually unclear due to size limitation of the screen of the smart phone. For example, when the user has recorded a video in which a baby is playing on the grass, and he or she wants to watch the baby's facial expressions and movements when playing this video, then if the percentage of the baby in the video screen is small, it is hard for the user to see the baby's facial expressions clearly.

### SUMMARY OF THE INVENTION

In order to solve the problem in related arts, a method and device for video display are provided by the present disclosure to enlarge a partial area of video content.

According to a first aspect of embodiments of the present disclosure, a method for video display is provided. The method may include: determining, when a first trigger action is detected on a first video window, a trigger position corresponding to the first trigger action; determining an observation window centered at the trigger position; enlarging a second video window in the observation window; and displaying the enlarged second video window on the first video window.

In an embodiment, determining the observation window centered at the trigger position includes: determining a period of time during which the first trigger action is being taken on the first video window; and determining the observation window centered at the trigger position based on the period of time.

In an embodiment, determining the observation window centered at the trigger position based on the period of time includes: determining a rectangle area centered at the trigger position with a predetermined length and width; determining a first enlargement factor for the rectangle area based on the period of time; and enlarging the rectangle area by the first enlargement factor to acquire the observation window centered at the trigger position.

In an embodiment, determining the first enlargement factor for the rectangle area based on the period of time includes: looking up a ratio corresponding to the period of time in an enlargement factor chart, the enlargement factor chart is used for recording the ratio corresponding to the period of time during which the first video window is triggered; and determining the first enlargement factor for the rectangle area based on the ratio.

In an embodiment, the method further includes: displaying the observation window on the first video window; determining whether the observation window exceeds the first video window in the process of enlarging the observation window; and prompting, when the observation window exceeds the first video window, a user to stop triggering the first video window.

In an embodiment, enlarging the second video window in the observation window includes: determining a first display resolution of the first video window and a second display resolution of the second video window; determining a second enlargement factor for the second video window based on the first display resolution and the second display resolution; and enlarging the second video window to the first display resolution corresponding to the first video window by the second enlargement factor.

In an embodiment, the method further includes: monitoring whether there is a second trigger action on the second video window; and controlling, when the second trigger action is detected on the second video window, a switch from the second video window to the first video window.

According to a second aspect of embodiments of the present disclosure, a device for video display is provided. The device may include: a first determination module configured to determine, when a first trigger action is detected on a first video window, a trigger position corresponding to the first trigger action; a second determination module configured to determine an observation window centered at the trigger position determined by the first determination module; an enlargement module configured to enlarge a second video window in the observation window determined by the second determination module; and a first display module configured to display the second video window enlarged by the enlargement module on the first video window.

In an embodiment, the second determination module includes: a first determination sub-module configured to determine a period of time during which the first trigger action is being taken on the first video window; and a second determination sub-module configured to determine the observation window centered at the trigger position based on the period of time determined by the first determination sub-module.

In an embodiment, the second determination sub-module includes: a third determination sub-module configured to determine a rectangle area centered at the trigger position with a predetermined length and width; a fourth determination sub-module configured to determine a first enlargement factor for the rectangle area determined by the third determination sub-module based on the period of time; and an first enlargement sub-module configured to enlarge the rectangle area by the first enlargement factor determined by the fourth determination sub-module to acquire the observation window centered at the trigger position.

In an embodiment, the fourth determination sub-module includes: a lookup sub-module configured to look up a ratio corresponding to the period of time in an enlargement factor chart, the enlargement factor chart is used for recording the ratio corresponding to the period of time during which the first video window is triggered; and a fifth determination sub-module configured to determine the first enlargement factor for the rectangle area based on the ratio looked up by the lookup sub-module.

In an embodiment, the device further includes: a second display module configured to display the observation window determined by the second determination module on the first video window; a third determination module configured to determine whether the observation window displayed by the second display module exceeds the first video window in the process of enlarging the observation window; and a prompt module configured to prompt a user to stop triggering the first video window when the third determination module determines that the observation window exceeds the first video window.

In an embodiment, the enlargement module includes: a sixth determination sub-module configured to determine a first display resolution of the first video window and a second display resolution of the second video window; a seventh determination sub-module configured to determine a second enlargement factor for the second video window based on the first display resolution and the second display resolution determined by the sixth determination sub-module; and a second enlargement sub-module configured to enlarge the second video window to the first display resolution corresponding to the first video window by the second enlargement factor determined by the seventh determination sub-module.

In an embodiment, the device further includes: a monitor module configured to monitor whether there is a second trigger action on the second video window displayed by the first display module; and a control module configured to control, when the second trigger action is detected on the second video window by the monitor module, a switch from the second video window to the first video window.

According to a third aspect of embodiments of the present disclosure, a method for video display is provided. The device may include: a processor; a memory for storing instructions, which are executable by the processor; wherein the processor is configured to determine, when a first trigger action is detected on a first video window, a trigger position corresponding to the first trigger action; determine an observation window centered at the trigger position; enlarge a second video window in the observation window; and display the enlarged second video window on the first video window.

Solutions provided by embodiments of the present disclosure may have the following beneficial effects. By enlarging the second video window in the observation window centered at the trigger position and displaying the enlarged second video window in the first video window, users may observe details of an interested partial area in the first video window in real time after enlarging the partial area, which achieving the automatic enlargement of a partial area of video content, and obtaining the zoom function of lens, thereby users may concentrate on observing the video of the partial area they are more interested in.

It is to be understood that the above general description and the following detailed description are merely for the purpose of illustration and explanation, and are not intended to limit the scope of the protection of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow diagram illustrating a method for video display according to an exemplary embodiment;
Fig. 1B is one scene illustrating a method for video display according to an exemplary embodiment;
Fig. 1C is another scene illustrating a method for video display according to an exemplary embodiment;
Fig. 2 is a flow diagram illustrating how to determine a observation window according to a first exemplary embodiment;
Fig. 3 is a flow diagram illustrating a method for video display according to a second exemplary embodiment;
Fig. 4 is a flow diagram illustrating a method for video display according to a third exemplary embodiment;
Fig. 5 is a flow diagram illustrating a method for video display according to a fourth exemplary embodiment;
Fig. 6 is a block diagram illustrating a device for video display according to an exemplary embodiment;
Fig. 7A is a block diagram illustrating another device for video display according to an exemplary embodiment;
Fig. 7B is a block diagram illustrating a second determining sub-module according to the embodiment of Fig. 7A;
Fig. 8 is a block diagram illustrating another device for video display according to an exemplary embodiment; and
Fig. 9 is a block diagram illustrating a device for video display according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of devices and methods consistent with aspects related to the present disclosure as recited in the appended claims.

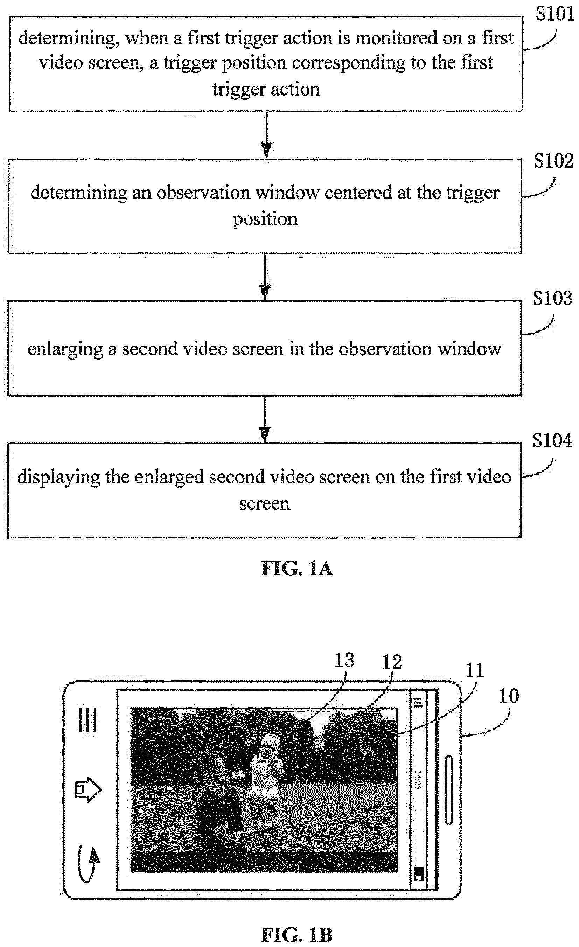

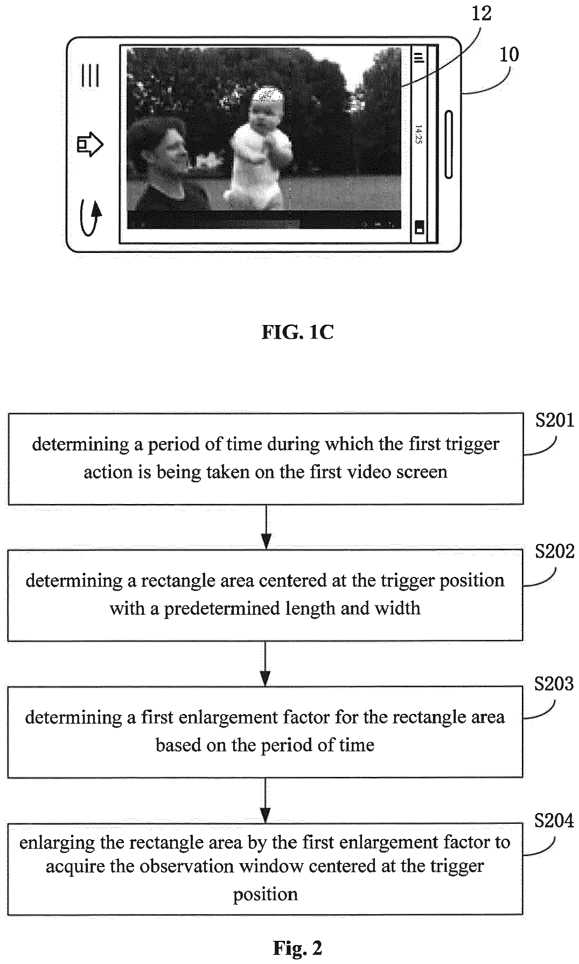

Fig. 1A is a flow diagram illustrating a method for video display according to an exemplary embodiment; Fig. 1B is one scene illustrating a method for video display according to an exemplary embodiment Fig. 1C is another scene illustrating a method for video display according to an exemplary embodiment. The method for video display may be applied to an electronic device (e.g., smart phone, tablet) capable of playing video files and may include following steps S101-S104.

In step S101, a trigger position corresponding to a first trigger action is determined when a first trigger action is detected on a first video window.

In an embodiment, the first trigger action may be a double-click action, a touch action or the like on the first video window. In an embodiment, the first video window may be the original video screen of the video file currently played on a video-playing device. In another embodiment, the first video window may be live video screen collected by a camera device in real time. In an embodiment, the trigger position may be represented by pixel coordinates on the first video window, for example, the trigger position is at the pixel coordinate (400, 480) on the first video window. In this case, the trigger position will be the position on the display screen where the user inputs the first trigger action, which may be the double-click action or touch action, for example.

In step S102, an observation window centered at the trigger position is determined. The observation window includes at least a partial area of the video display, and may include the whole area of the video display.

In an embodiment, the size of the observation window may be determined by a period of time during which the first trigger action is being taken on the first video window. In one example, the time taken between the two clicks of the double click is the time used to determine the size of the observation window. In another example, the duration of time that the user inputs and holds a touch trigger action is the time used to determine the size of the observation window. The duration of time of the trigger action is used to determine the size of the observation window by, for example, the longer the period of time, the bigger the size of observation window.

In another example, the trigger action may be a pressure dependent action, where the device upon which the video is being displayed is configured to detect the pressure associated with a touch action on the screen. The method may include determining an applied pressure associated with a touch action, and determine the size of the observation window based upon the applied pressure. The applied pressure may be determined as a maximum pressure applied during the touch action, or as an average pressure applied for the duration of the touch action, for example.

In step S103, a second video window is enlarged from the partial area of the first video window that is contained within the observation window.

In step S104, the enlarged second video window is displayed on the first video window.

In an embodiment, in order to prevent the size of the second video window exceeding the size of the first video window due to a big enlargement factor, the enlargement factor for the second video window may be limited by the first display resolution of the first video window, for example, the enlargement factor may be determined based on the first resolution and the second display resolution corresponding to the second video window, so as to ensure that the second video window is equal to or less than the size of the first video window.

In an example scenario, as shown in Fig. 1B, if the video-playing device 10 is playing a video currently, and a first trigger action taken on the facial area of the baby by the user is detected on the first video window 11, a rectangle area 13 (e.g., 50*40) centered at the trigger position of the first trigger action is determined with a predetermined length and width (e.g., the length is 50 pixels and the width is 40 pixels), and a first enlargement factor for the rectangle area 13 is usually determined based on the period of time during which the first trigger action is being taken on the first video window 11, for example, if the user inputs the trigger action on the first video window 11 over a period of 10 seconds, the rectangle area 13 may be enlarged to the observation window 12, and the second video window in the observation window 12 may be enlarged to the first display resolution corresponding to the first video window 11, then the second video window may be played, such that the user can clearly observe the baby's expressions and airs.

In this embodiment, by enlarging the second video window in the observation window centered at the trigger position and displaying the enlarged second video window in the first video window, users may observe details of an interested partial area in the first video window in real time after enlarging the partial area, which achieving the automatic enlargement of a partial area of video content, and obtaining the zoom function of lens, thereby users may concentrate on observing the video of the partial area they are more interested in.

In an embodiment, determining the observation window centered at the trigger position may include: determining a period of time during which the first trigger action is being taken on the first video window; and determining the observation window centered at the trigger position based on the period of time.

In an embodiment, determining the observation window centered at the trigger position based on the period of time may include: determining a rectangle area centered at the trigger position with a predetermined length and width; determining a first enlargement factor for the rectangle area based on the period of time; and enlarging the rectangle area by the first enlargement factor to acquire the observation window centered at the trigger position.

In an embodiment, determining the first enlargement factor for the rectangle area based on the period of time may include: looking up a ratio corresponding to the period of time in an enlargement factor chart, the enlargement factor chart is used for recording the ratio corresponding to the period of time during which the first video window is triggered; and determining the first enlargement factor for the rectangle area based on the ratio.

In an embodiment, the method for video display may further include: displaying the observation window on the first video window; determining whether the observation window exceeds the size of the first video window in the process of enlarging the observation window; and prompting a user to stop triggering the first video window when the observation window exceeds the first video window.

In an embodiment, enlarging a second video window in the observation window may include: determining a first display resolution of the first video window and a second display resolution of the second video window; determining a second enlargement factor for the second video window based on the first display resolution and the second display resolution; and enlarging the second video window to the first display resolution corresponding to the first video window by the second enlargement factor.

In an embodiment, the method for video display may further include: detecting a second trigger action on the second video window; and controlling, when the second trigger action is detected on the second video window, a switch from the second video window back to the first video window. The second trigger action is like the first trigger action. For example, the second trigger action may be an input such as a double click, a touch or the like.

Reference will now be made in detail to subsequent embodiments to illustrate how to achieve the video display.

The above described method provided in embodiments of the present disclosure may enlarge a interested partial area in the first video window to enable users to observe details of the partial region, by observing the enlargement of the partial area, and obtaining the zoom function of lens, thereby users may concentrate on observing the video of the partial region they are more interested in.

The technical solution provided by the present disclosure will be described in the following specific embodiments.

Fig. 2 is a flow diagram illustrating how to determine an observation window according to a first exemplary embodiment. This embodiment illustrates how to determine an observation window using the method described above in conjunction with Fig. 1B, as shown in Fig.2, it may include following steps.

In step S201, a period of time during which the first trigger action is being taken on the first video window is determined. The trigger action may be an input such as a double click, a touch, or the like.

In an embodiment, when the first trigger action is the double-click action, the period of time may be the time interval between the two click actions of the double click; and when the first trigger action is the touch action, the period of time may be the length of time that the first video window is being continuously touched for. In this case, the trigger position will be the position on the screen where the user activates the double-click action or touch action of the trigger action. The double-click trigger action could be a double click with a mouse, cursor or other input device, or could also be a double-click with the users finger on a touch sensitive screen.

In step S202, a rectangle area centered at the trigger position may be determined with a predetermined length and width.

In an embodiment, the length and width of the rectangle area may be set in equal proportion to the length and width corresponding to the first display resolution of the first video window. For example, if the first display resolution is 800*640, the preset number of pixels of the rectangle area in the length direction is 40 (that is, the length of the rectangle area), the present number of pixels of the rectangle area in the width direction is 32.

In step S203, a first enlargement factor for the rectangle area is determined based on the period of time of the first trigger action.

In an embodiment, a ratio corresponding to the period of time may be looked up in an enlargement factor chart, and the first enlargement fact may be determined based on the ratio. In an embodiment, the enlargement factor chart may be provided by electronic device providers through lots of experiment tests.

In step S204, the rectangle area is enlarged by the first enlargement factor to acquire the observation window centered at the trigger position.

In an embodiment, the period of time of the first trigger action may be in direct proportion to the size of the observation window, or the period of time and the size of the observation window may be determined based on a preset enlargement factor chart, the ratio corresponding to the period of time in the enlargement factor chart may be achieved by electronic device provider through lots of experiment tests. For example, if the period of time of the first trigger action is 10ms which corresponds to a ratio of 1.1, the rectangle area 13 may be enlarged 1.1 times; if the period of time is 20ms which corresponds to a ratio of 3.2, the rectangle area 13 may be enlarged by 3.2 times, so as to obtain the observation window 12, the partial area of the first video window in the observation window 12 need to be enlarged onto the whole video interface, that is, the area corresponding to the first video window 11.

In the embodiment, the first enlargement factor is determined based on the period of time, and the rectangle area is enlarged by the first enlargement factor to acquire the observation window centered at the trigger position, such that users may control the period of time based on their observation requirements so as to adjust the observation window, thereby users may adjust the size of the observation window flexibly, which bringing users an effect of playing the partial area that users is more interested in.

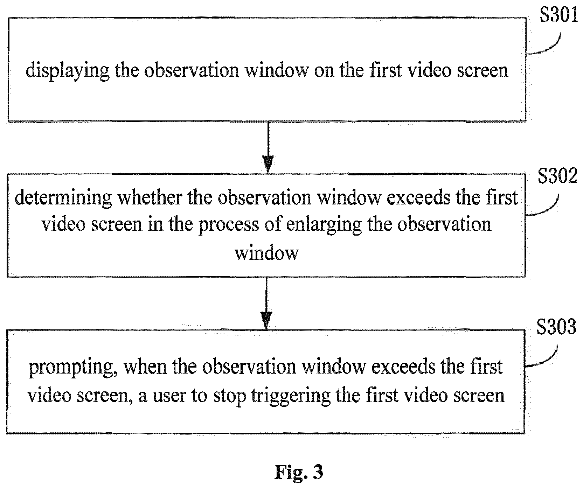

Fig. 3 is a flow diagram illustrating a method for video display according to a second exemplary embodiment. This embodiment illustrates how to display an observation window using the method described above in conjunction with Fig. 1B, as shown in Fig.3, it may include following steps.

In step S301, the observation window is displayed on the first video window.

As shown in Fig.1B, the observation window 12 may be displayed as a rectangular block on the first video window. In an embodiment, the observation window 12 may be changed dynamically on the first video window in relation with the change in the period of time of the first trigger action. For example, the observation window 12 may expand dynamically from the rectangle area 13, which is regarded as the original starting sized block, to an expanded observation window of a larger sized rectangular block. The expansion may be visible to the user and may happen in real-time in relation to the period of time of the first trigger action, and in this process, users may learn the display area of the observation window directly and control the video region required to be enlarged flexibly.

In step S302, whether the size of the observation window exceeds the size of the first video window is determined in the process of enlarging the observation window.

In step S303, when the size of the observation window exceeds the size of the first video window, a user is prompted to stop the first trigger action on the first video window.

In an embodiment, if the period of time is too long, which leads to a too big enlargement factor so that the size of the observation window exceeds the first video window, the user may be prompted to stop triggering the first video window by a prompt box.

In the embodiment, by displaying the observation window on the first video window, users may learn the display area of the observation window directly and flexibly control the video area required to be enlarged. When the observation window exceeds the first video window, users are prompted to stop applying the first trigger action to the first video, so as to ensure the efficiency of partial enlargement display to avoid users' misoperation disturbing the normal play of the first video window.

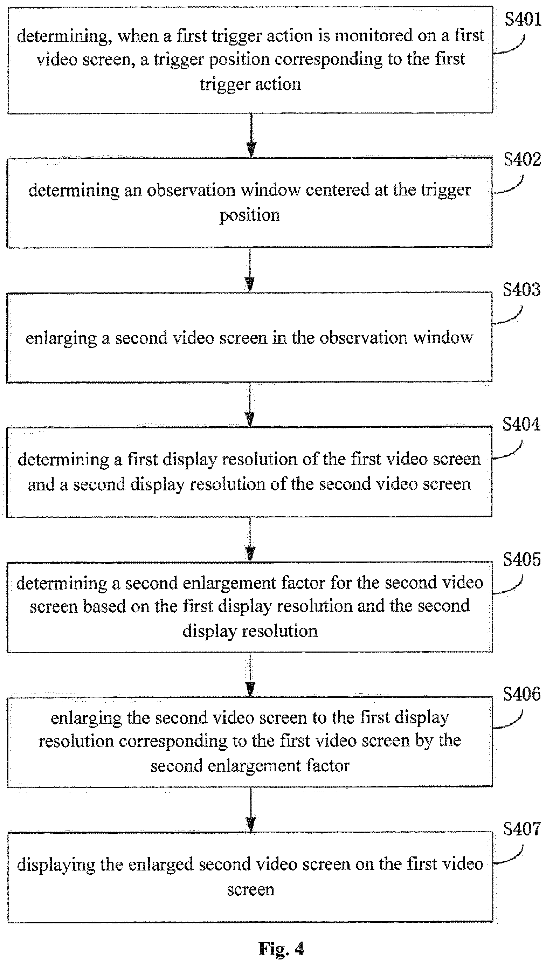

Fig. 4 is a flow diagram illustrating a method for video display according to a third exemplary embodiment. This embodiment illustrates how to enlarge the second video window to the first display resolution corresponding to the first video window using the method described above in conjunction with Fig. 1B and Fig. 1C, as shown in Fig.4, it may include following steps.

In step S401, when a first trigger action is detected on a first video window, a trigger position corresponding to the first trigger action is determined.

In step S402, an observation window centered at the trigger position is determined.

In step S403, a second video window in the observation window is enlarged.

Descriptions of steps S401 to S403 may refer to the related description of the above embodiment in Fig. 1A, which will not be repeated herein.

In step S404, a first display resolution of the first video window and a second display resolution of the second video window are determined.

In step S405, a second enlargement factor for the second video window is determined based on the first display resolution and the second display resolution.

In step S406, the second video window is enlarged to the first display resolution corresponding to the first video window by the second enlargement factor.

In step S407, the second video window is displayed on the first video window.

In an example scenario, as shown in Fig. 1B, the first display resolution of the first video window 11 is 800*640, and the rectangle area is 40*32, the first enlargement factor acquired in the above described embodiment is 4, then the second display resolution of the second video window in the observation window 12 is 160*128, at this moment, the second video window need to be enlarged to the first display resolution of the first video window 11, the second enlargement factor is 800/160=5, that is, the second video window need to be enlarged 5 times, so as to display the second video window on the display area of the first video window 11, the display result is shown as Fig. 1C.

In the embodiment, the second enlargement factor for the second video window is determined based on the first display resolution and the second display resolution, so as to enlarge the second video window to the first display resolution corresponding to the first video window by the second enlargement factor and play the second video window, such that users may watch the second video window in the enlarged observation window in the whole play interface. It should be ensured that the second video window is enlarged with a proper ratio to avoid reducing visual aesthetics.

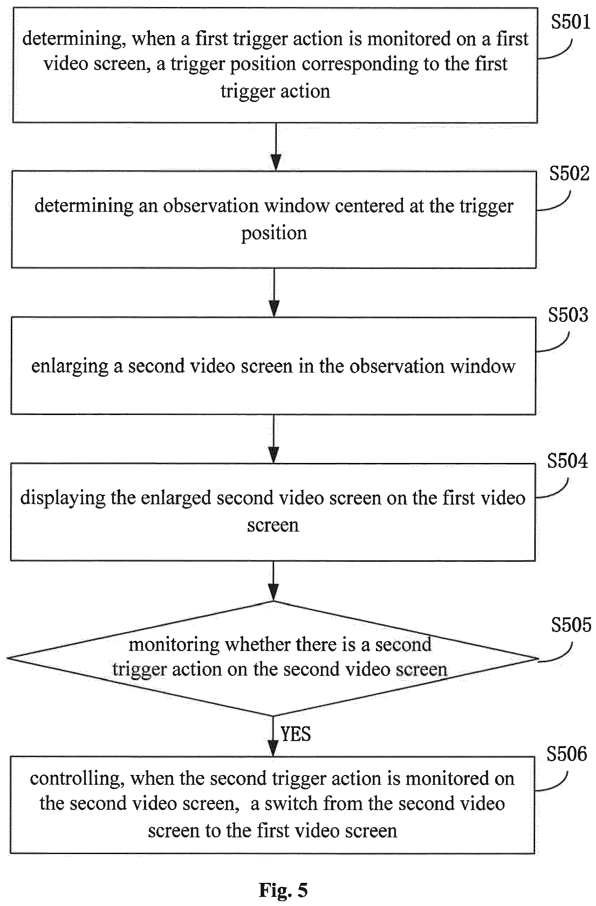

Fig. 5 is a flow diagram illustrating a method for video display according to a fourth exemplary embodiment. This embodiment illustrates how to switch the second video window to the first video window using the method described above in conjunction with Fig. 1B and Fig. 1C, as shown in Fig.5, it may include following steps.

In step S501, when a first trigger action is detected on a first video window, a trigger position corresponding to the first trigger action is determined.

In step S502, an observation window centered at the trigger position is determined.

In step S503, a second video window in the observation window is enlarged.

In step S504, the enlarged second video window is displayed in the first video window.

Descriptions of steps S501 to S504 may refer to the related description of the above embodiment in Fig. 1A, which will not be repeated herein.

In step S505, whether there is a second trigger action is detected on the second video window, and if the second trigger action is detected on the second video window, perform step S506; if the second trigger action is not detected, continue playing the second video window. The second trigger action is of the same type of input as the first trigger action. This could be, for example, a double click or touch input, or the like.

In an embodiment, the implementation of the second trigger action may refer to the implementation of the first trigger action, which will not be repeated herein.

In step S506, when the second trigger action is detected on the second video window, controlling a switch from the second video window to the first video window.

The second video window 13 is merely the enlarged video display of the video in the first video window 11, in order to ensure users watching the first video window 11 as normal, a second trigger action may be detected on the second video window 13. If the second trigger action is detected, the video-playing device 10 may be controlled to switch from the second video window to the first video window 11. The second trigger action is of the same type as the first trigger action. For example, this may be an input such as a double click, a touch or the like.

In the embodiment, when the second trigger action is detected in the second video window, a switch from the second video window to the first video window may be performed, and thus the switch between the partial enlarged second video window and the original first video window may be performed flexibly, to achieve the zoom function similar to lens in the real-time display process, which improving users' viewing experience.

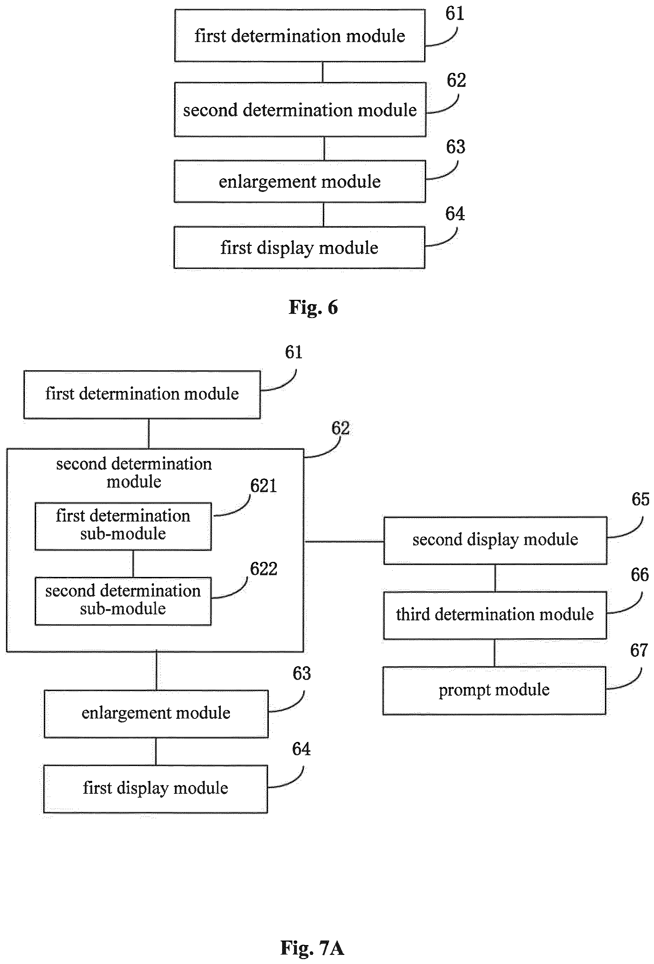

Fig. 6 is a block diagram illustrating a device for video display according to an exemplary embodiment, as shown in Fig.6, the device for video display may include: a first determination module 61 configured to determine, when a first trigger action is detected on a first video window, a trigger position corresponding to the pixel location of the first trigger action upon the first video window; a second determination module 62 configured to determine an observation window centered at the trigger position determined by the first determination module 61; an enlargement module 63 configured to create an enlarged second video window within the observation window determined by the second determination module 62; and a first display module 64 configured to display the second video window enlarged by the enlargement module 63 on the first video window.

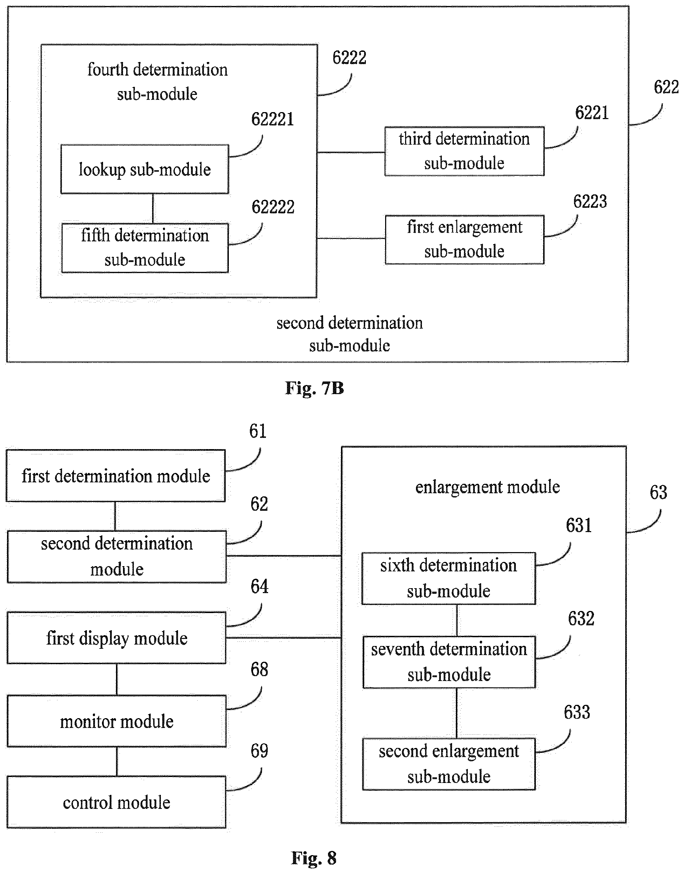

Fig. 7A is a block diagram illustrating another device for video display according to an exemplary embodiment; Fig. 7B is a block diagram illustrating a second determining sub-module according to the embodiment of Fig. 7A. As shown in Fig. 7A, it's on the basis of the embodiment shown in Fig. 6, in an embodiment, the second determination module 62 may include: a first determination sub-module 621 configured to determine a period of time during which the first trigger action is carried out on the first video window; and a second determination sub-module 622 configured to determine the observation window centered at the trigger position based on the same period of time determined by the first determination sub-module 621.

In an embodiment, as shown in Fig. 7B, the second determination sub-module 622 may include: a third determination sub-module 6221 configured to determine a rectangle area centered at the trigger position with a predetermined length and width; a fourth determination sub-module 6222 configured to determine a first enlargement factor for the rectangle area determined by the third determination sub-module 6221 based on the period of time of the first trigger action; and an first enlargement sub-module 6223 configured to enlarge the rectangle area by the first enlargement factor determined by the fourth determination sub-module 6222 to acquire the observation window centered at the trigger position.

In an embodiment, the fourth determination sub-module 6222 may include: a lookup sub-module 62221 configured to look up a ratio corresponding to the period of time in an enlargement factor chart, the enlargement factor chart is used for recording the ratio corresponding to the period of time during which the first video window is triggered; and a fifth determination sub-module 62222 configured to determine the first enlargement factor for the rectangle area based on the ratio looked up by the lookup sub-module 622221.

In an embodiment, the device may further include: a second display module 65 configured to display the observation window determined by the second determination module 62 on the first video window; a third determination module 66 configured to determine whether the observation window displayed by the second display module 65 exceeds the first video window in the process of enlarging the observation window; and a prompt module 67 configured to prompt a user to stop triggering the first video window when the third determination module 66 determines that the observation window exceeds the first video window.

Fig. 8 is a block diagram illustrating another device for video display according to an exemplary embodiment, as shown in Fig. 8, it's on the basis of the embodiments shown in Fig. 6 or Fig. 7A, in an embodiment, the enlargement module 63 may include: a sixth determination sub-module 631 configured to determine a first display resolution of the first video window and a second display resolution of the second video window; a seventh determination sub-module 632 configured to determine a second enlargement factor for the second video window based on the first display resolution and the second display resolution determined by the sixth determination sub-module 631; and a second enlargement sub-module 633 configured to enlarge the second video window to the first display resolution corresponding to the first video window by the second enlargement factor determined by the seventh determination sub-module 632.

In an embodiment, the device may further include: a monitor module 68 configured to monitor whether there is a second trigger action on the second video window displayed by the first display module 64; and a control module 69 configured to control, when the second trigger action is detected on the second video window by the monitor module 68, a switch from the second video window to the first video window.

Implementations of the operations performed by the modules of the device in the above embodiments have been described in the related embodiments for method, which will not be repeated herein.

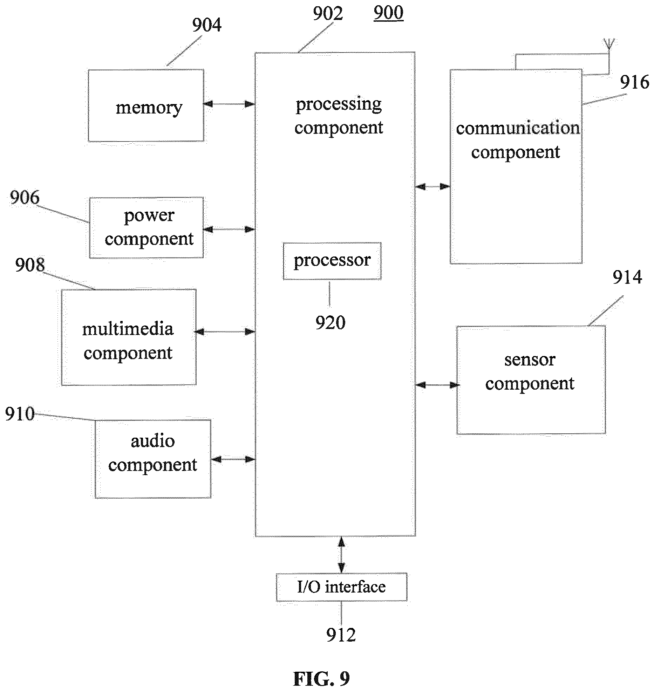

Fig. 9 is a block diagram illustrating a structure suitable for a device for video display according to an exemplary embodiment. For example, the device 900 may be a mobile phone, a computer, a digital broadcast terminal, a message transceiver, a game console, a tablet device, a medical equipment, a fitness equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data may include instructions for any applications or methods operated on the device 4900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a period of time and a pressure associated with the touch or swipe action. In some embodiments, the multimedia component 908 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900.

The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a distance sensor, a pressure sensor, or a temperature sensor.

The communication component 916 is configured to facilitate communication, wired or wirelessly, between the device 400 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 904 including instructions executable by the processor 920 in the device 900 to perform the above-described methods. For example, the non-transitory computer-readable storage medium may be a ROM, a RAM, a CD-ROM, a magnetic tape, a floppy disc, an optical data storage device, and the like.

In exemplary embodiments, there is also provided a non-transitory computer-readable storage medium including instructions that, when executed by a processor of a mobile terminal, enables the mobile terminal to perform the above-described method for video display.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the substantive scope of the disclosure is limited only by the appended claims.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It should be understood that the disclosure is not limited to the precise structure as described above and shown in the figures, but can have various modification and alternations without departing from the scope of the disclosure. The scope of the disclosure is limited only by the appended claims.

## Claims

1. A method for video display, **characterized by** comprising:
determining (S101, S401, S501), when a first trigger action is detected on a first video window, a trigger position corresponding to the first trigger action;
determining (S102, S402, S502) an observation window centered at the trigger position;
enlarging (S103, S403, S503) a second video window in the observation window; and
displaying (S104, S407, S504) the enlarged second video window on the first video window.

2. The method of claim 1, wherein determining (S102, S402, S502) the observation window centered at the trigger position comprises:
determining (S201) a period of time during which the first trigger action is being taken on the first video window; and
determining the observation window centered at the trigger position based on the period of time.

3. The method of claim 2, wherein determining the observation window centered at the trigger position based on the period of time comprises:
determining (S202) a rectangle area centered at the trigger position with a predetermined length and width;
determining (S203) a first enlargement factor for the rectangle area based on the period of time; and
enlarging (S204) the rectangle area by the first enlargement factor to acquire the observation window centered at the trigger position.

4. The method of claim 3, wherein determining (S203) the first enlargement factor for the rectangle area based on the period of time comprises:
looking up a ratio corresponding to the period of time in an enlargement factor chart, the enlargement factor chart is used for recording the ratio corresponding to the period of time during which the first video window is triggered; and
determining the first enlargement factor for the rectangle area based on the ratio.

5. The method of claim any preceding claim, further comprising:
displaying (S301) the observation window on the first video window;
determining (S302) whether the observation window exceeds the first video window in the process of enlarging the observation window; and
prompting (S303), when the observation window exceeds the first video window, a user to stop triggering the first video window.

6. The method of any preceding claim, wherein enlarging the second video window in the observation window comprises:
determining (S404) a first display resolution of the first video window and a second display resolution of the second video window;
determining (S405) a second enlargement factor for the second video window based on the first display resolution and the second display resolution; and
enlarging (S406) the second video window to the first display resolution corresponding to the first video window by the second enlargement factor.

7. The method of any preceding claim, further comprising:
monitoring (505) whether there is a second trigger action on the second video window; and
controlling (S506), when the second trigger action is detected on the second video window, a switch from the second video window to the first video window.

8. A device for video display, **characterized by** comprising:
a first determination module (61) configured to determine, when a first trigger action is detected on a first video window, a trigger position corresponding to the first trigger action;
a second determination module (62) configured to determine an observation window centered at the trigger position determined by the first determination module;
an enlargement module (63) configured to enlarge a second video window in the observation window determined by the second determination module; and
a first display module (64) configured to display the second video window enlarged by the enlargement module on the first video window.

9. The device of claim 8, wherein the second determination module (62) comprises:
a first determination sub-module (621) configured to determine a period of time during which the first trigger action is being taken on the first video window; and
a second determination sub-module (622) configured to determine the observation window centered at the trigger position based on the period of time determined by the first determination sub-module (621).

10. The device of claim 9, wherein the second determination sub-module (622) comprises:
a third determination sub-module (6221) configured to determine a rectangle area centered at the trigger position with a predetermined length and width;
a fourth determination sub-module (6222) configured to determine a first enlargement factor for the rectangle area determined by the third determination sub-module (6221) based on the period of time; and
a first enlargement sub-module (6223) configured to enlarge the rectangle area by the first enlargement factor determined by the fourth determination sub-module (6222) to acquire the observation window centered at the trigger position.

11. The device of claim 10, wherein the fourth determination sub-module (6222) comprises:
a lookup sub-module (62221) configured to look up a ratio corresponding to the period of time in an enlargement factor chart, the enlargement factor chart is used for recording the ratio corresponding to the period of time during which the first video window is triggered; and
a fifth determination sub-module (62222) configured to determine the first enlargement factor for the rectangle area based on the ratio looked up by the lookup sub-module.

12. The device of any of claims 8 to 11, further comprising:
a second display module (65) configured to display the observation window determined by the second determination module (62) on the first video window;
a third determination module (66) configured to determine whether the observation window displayed by the second display module (65) exceeds the first video window in the process of enlarging the observation window; and
a prompt module (67) configured to prompt a user to stop triggering the first video window when the third determination module (66) determines that the observation window exceeds the first video window.

13. The device of any of claims 8 to 12, wherein the enlargement module (63) comprises:
a sixth determination sub-module (631) configured to determine a first display resolution of the first video window and a second display resolution of the second video window;
a seventh determination sub-module (632) configured to determine a second enlargement factor for the second video window based on the first display resolution and the second display resolution determined by the sixth determination sub-module (631); and
a second enlargement sub-module (633) configured to enlarge the second video window to the first display resolution corresponding to the first video window by the second enlargement factor determined by the seventh determination sub-module (632).

14. The device of any of claims 8 to 13, further comprising:
a monitor module (68) configured to monitor whether there is a second trigger action on the second video window displayed by the first display module (64); and
a control module (69) configured to control, when the second trigger action is detected on the second video window by the monitor module (68), a switch from the second video window to the first video window.

15. A device for video display, **characterized by** comprising:
a processor;
a memory for storing instructions, which are executable by the processor;
wherein the processor is configured to perform the method of any of claims 1 to 7.
